# FASCICULE DE BREVET EUROPEEN

(11) **EP 3 302 195 B1**
(45) Date de publication et mention de la délivrance du brevet: **20.10.2021**
(21) Numéro de dépôt: 16741351.7
(22) Date de dépôt: 03.06.2016
(51) Int. Cl.: A47J 42/04, A47J 42/38

(54) **DISPOSITIF DE MOUTURE D'UN PRODUIT D'ASSAISONNEMENT AU MOYEN D'UN MOULIN ET MOULIN COMPORTANT UN TEL DISPOSITIF DE MOUTURE**
VORRICHTUNG ZUM MAHLEN EINES WÜRZMITTELS MITHILFE EINER MÜHLE SOWIE MÜHLE MIT SOLCH EINER MAHLVORRICHTUNG
DEVICE FOR GRINDING A SEASONING PRODUCT BY MEANS OF A MILL AND MILL COMPRISING SUCH A GRINDING DEVICE

(30) Priorité: 04.06.2015 WO PCT/FR2015/051485; 26.06.2015 FR 1555926; 25.08.2015 FR 1557892
(43) Date de publication de la demande: 11.04.2018
(73) Titulaire: Peugeot Saveurs, 25440 Quingey (FR)
(72) Inventeur: LAUZET, Maurice, 25440 Chencey Buillon (FR); MESNIER, Christian, 25440 Chouzelot (FR)
(74) Mandataire: Cabinet Bleger-Rhein-Poupon
(86) Numéro de dépôt international: PCT/FR2016/051330
(87) Numéro de publication internationale: WO 2016/193638

(56) Documents cités:
- GB-A- 2 496 891
- US-A- 4 509 698
- US-A1- 2005 077 405
- US-B1- 7 377 458

## Description

La présente invention a pour objet un dispositif de mouture d'un produit d'assaisonnement, tel que notamment du sel, une épice ou un condiment, au moyen d'un moulin, ledit dispositif de mouture comportant une cuvette d'allure annulaire et une poire d'allure tronconique apte à être entraînée en rotation dans ladite cuvette lors de l'actionnement du moulin, au moyen d'une tige axiale reliée à son sommet, la face interne de ladite cuvette et la face externe de ladite poire étant pourvues de dentures, ledit dispositif de mouture comportant également une bride de solidarisation audit moulin, ladite bride présentant une forme en « U » comportant deux branches latérales reliées par une branche transversale, la distance comprise entre les deux branches latérales étant ajustée au diamètre de ladite cuvette.

L'invention concerne par ailleurs un moulin pour moudre un produit d'assaisonnement, tel que notamment du sel, une épice ou un condiment équipé d'un tel dispositif de mouture.

Le but de la présente invention est de proposer un perfectionnement aux dispositifs de mouture classiques permettant d'améliorer la précision de leur mécanisme quelle que soit la nature du matériau dont il est constitué.

De manière classique, les éléments constitutifs du dispositif de mouture d'un moulin à épices peuvent être fabriqués tous à partir du même matériau ou en un matériau différent, ce matériau pouvant consister en un métal, une céramique, un matériau plastique ou composite ou tout matériau présentant des caractéristiques équivalentes. La nature du matériau choisi est fondamentale et est sélectionnée notamment en fonction du type de produit d'assaisonnement pour lequel le moulin est conçu et des caractéristiques que l'on souhaite conférer à celui-ci. En effet, la nature des matériaux conditionne aussi bien la fiabilité du mécanisme de mouture que son ergonomie, la qualité de la mouture obtenue et la durée de vie du moulin. Par ailleurs, l'aspect esthétique du moulin est également déterminé par le type de matériau choisi. Des exemples de dispositifs de mouture d'un produit d'assaisonnement sont divulgués par exemple dans GB-A1-2496891 et US-A-4509698.

Il a pu être observé que dans les dispositifs de mouture du genre indiqué en préambule, les dentures présentes sur la face interne de la cuvette et sur la face externe de la poire peuvent avoir tendance à s'effriter du fait d'un contact intempestif entre ces deux pièces lors de la rotation de la poire par rapport à la cuvette. En effet, tel que conçu à ce jour, le mécanisme ne permet pas de garantir un parfait centrage de la poire dans la cuvette à tout instant. Un tel effritement des dentures se produit plus volontiers lorsqu'elles sont réalisées en un matériau friable tel que la céramique. Ceci nuit à la longévité et à la fiabilité du mécanisme et est particulièrement gênant du point de vue résultat car des particules de matériau peuvent se retrouver mélangées à la poudre de sel, épice ou condiment produite et donc la polluer aussi bien du point de vue esthétique que du point de vue qualitatif. De surcroît, les particules de matériaux peuvent se révéler nocifs en cas d'ingestion.

Par conséquent, la présente invention a pour but de proposer un dispositif de mouture d'un produit d'assaisonnement, tel que notamment du sel, une épice ou un condiment, dans un moulin, présentant une structure telle que tout contact entre la poire et la cuvette est évité lors de la rotation de la poire dans la cuvette. Ainsi, le risque d'effritement des dentures présentes sur la face interne de la cuvette et sur la face externe de la poire est supprimé, ce qui permet d'améliorer la longévité du moulin et de garantir la qualité de la mouture obtenue.

A cet effet, la présente invention concerne un dispositif de mouture selon l'objet de la revendication 1.

Le dispositif de mouture selon l'invention comporte d'une part un disque de centrage de diamètre identique à celui de ladite cuvette, comportant un orifice central pour le passage de ladite tige axiale, et au moins une lumière pour le passage du produit d'assaisonnement, et d'autre part des moyens de blocage en rotation du disque de centrage par rapport à ladite cuvette.

Conformément à une caractéristique préférée de l'invention, les moyens de blocage en rotation du disque de centrage par rapport à ladite cuvette peuvent comporter au moins une paire de pattes s'étendant de manière diamétralement opposée sur le bord dudit disque dans le prolongement de sa face inférieure et au moins une paire d'encoches réalisées de manière diamétralement opposée sur le chant supérieur de ladite cuvette et présentant une forme complémentaire à celle desdites pattes.

D'autre part, l'invention prévoit également que l'orifice central dudit disque présente préférentiellement une section circulaire complémentaire à celle de la base de ladite tige axiale.

Une autre caractéristique préférée de l'invention est définie par le fait que la face inférieure de la poire comporte un moyen femelle ou mâle, d'axe aligné avec celui de la tige, apte à être monté mobile en rotation par rapport à un moyen mâle ou femelle complémentaire centré sur la branche transversale de ladite bride.

Dans ce cas, selon une variante préférée de réalisation envisageable, ladite bride peut comporter un plot cylindrique centré sur la face supérieure de sa branche transversale, tandis que la face inférieure de la poire peut comporter un renfoncement de forme complémentaire à celui du plot et d'axe aligné avec celui de la tige axiale.

Le dispositif de mouture selon l'invention se caractérise encore en ce qu'il comporte des moyens de blocage en rotation de ladite cuvette par rapport à ladite bride.

Dans ce cas, ladite cuvette peut comporter une paire d'encoches formées de manière diamétralement opposée sur son chant inférieur, tandis que ladite bride peut comporter une paire de butées de forme complémentaire à celle desdites encoches et s'étendant chacune au niveau d'un angle formé entre la branche transversale de la bride et une de ses branches latérales,

La présente demande a également pour objet un moulin pour moudre un produit d'assaisonnement tel que notamment du sel, une épice ou un condiment, caractérisé en ce qu'il comporte un dispositif de mouture tel que défini ci-dessus.

Conformément à une variante préférée de réalisation plus spécifiquement adaptée à certains types de produits d'assaisonnement, le moulin selon l'invention peut comporter des moyens de brassage et/ou d'entraînement du produit d'assaisonnement en direction de la cuvette.

L'invention sera mieux comprise, et d'autres caractéristiques et avantages de l'invention apparaîtront à la lumière de la description qui suit d'un exemple de réalisation donné à titre non limitatif. La description est à lire en relation avec les dessins annexés dans lesquels :

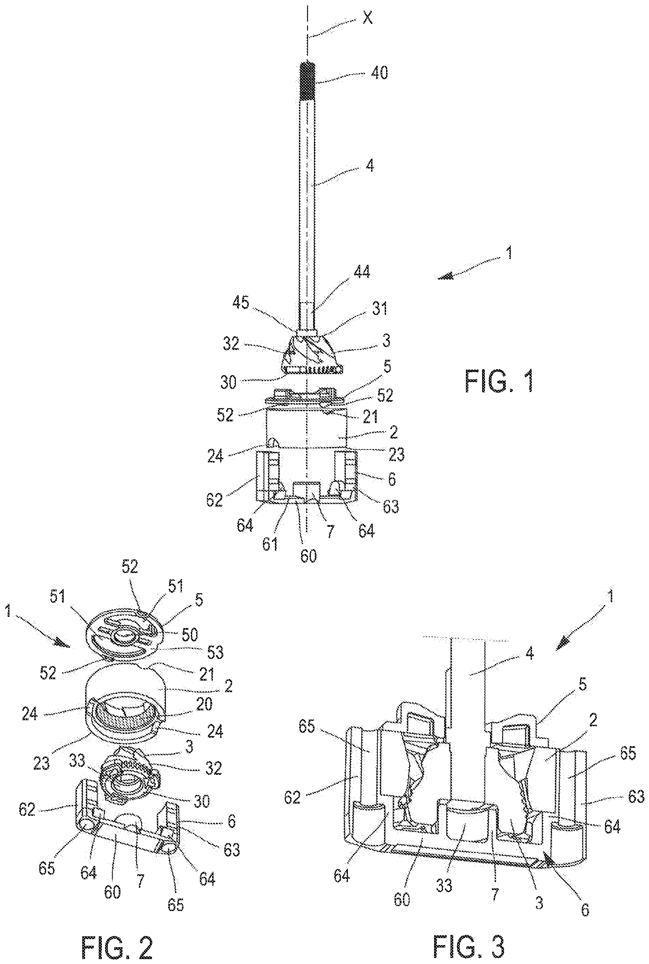

- La figure 1 illustre une vue éclatée d'un dispositif de mouture selon l'invention,
- La figure 2 illustre une vue éclatée prise sous un angle différent du dispositif de mouture de la figure 1, et dans laquelle la tige axiale n'est pas représentée, pour améliorer la clarté,
- La figure 3 est une vue partielle en coupe du dispositif de mouture de la figure 1 en position assemblée,

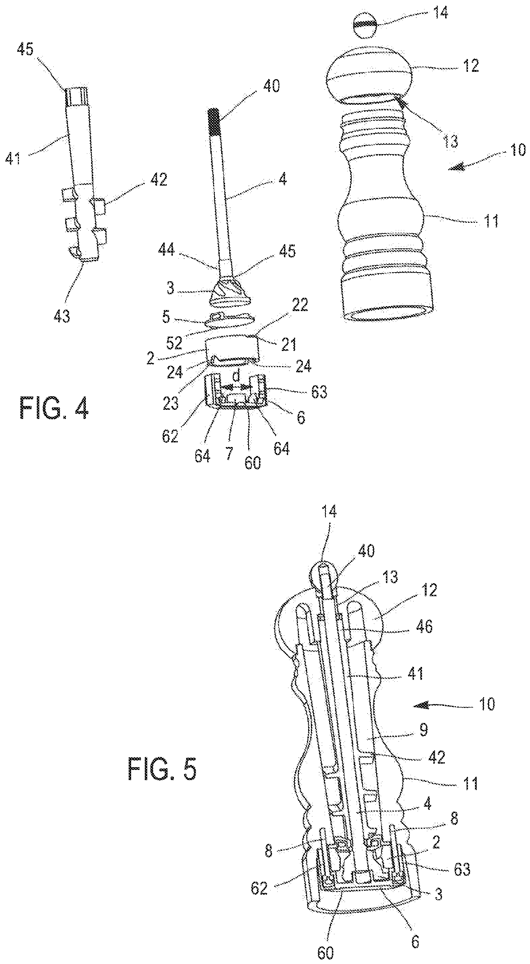

- La figure 4 illustre une vue éclatée d'un moulin pour la mouture d'un produit d'assaisonnement équipé du dispositif de mouture de la figure 1,
- La figure 5 illustre une vue en coupe du moulin de la figure 4 en position assemblée.

En référence aux figures, la présente invention concerne un dispositif de mouture 1 de produit d'assaisonnement comportant de manière classique une cuvette 2 d'allure annulaire et une poire 3 d'allure tronconique dont le sommet 31 est prolongé par une tige axiale 4.

Une bride 6 permet de solidariser l'ensemble formé par la cuvette 2, la poire 3 reliée à la tige axiale 4 au corps 11 d'un moulin 10, au moyen de vis 8. En fait, la bride 6 présente une forme en « U » comportant deux branches latérales 62, 63 reliées par une branche transversale 60. La distance d comprise entre les deux branches latérales 62, 63 est ajustée au diamètre de la cuvette 2.

Ainsi, en position assemblée du dispositif de mouture 1 sur le moulin 10, la branche transversale 60 de la bride 6 est en appui contre le chant inférieur 23 de la cuvette 2 et ses branches latérales 62, 63 sont en appui contre la face externe de la cuvette 2.

Les vis 8 de fixation de la bride 6 au corps 11 du moulin 10 sont classiquement insérées dans des passages traversants 65 formés dans chacune des branches latérales 62, 63 de la bride 6 puis vissées dans une collerette que comporte intérieurement le corps 11 dudit moulin 10.

En effet, ce dernier est creux et ménage un réservoir 9 pour un produit d'assaisonnement communiquant avec la cuvette 2 lorsque le dispositif de mouture 1 est assemblé sur le moulin 10.

Par ailleurs, le dispositif de mouture 1 selon l'invention comporte des moyens de blocage en rotation de la cuvette 2 par rapport à la bride 6. Dans la variante de réalisation illustrée, ils sont définis par une paire d'encoches 24 formées de manière diamétralement opposée sur le chant inférieur 23 de la cuvette 2 et une paire de butées 64 de forme complémentaire à celle des encoches 24 que comporte la bride 6 et s'étendant chacune au niveau d'un angle formé entre sa branche transversale 60 et une de ses branches latérales 62, 63. La forme incurvée que présente les butées 64 et les encoches 24 dans l'exemple illustré permet en outre de faciliter le bon positionnement de la bride 6 par rapport à la cuvette 2.

Le moulin 10 comporte également un chapeau 12, surmontant le corps 11 et monté mobile en rotation sur celui-ci. Le chapeau 12 présente un passage interne traversant centré sur l'axe du moulin 10, destiné à être traversé par la tige axiale 4.

Cette dernière présente une extrémité libre filetée 40 sur laquelle, lorsqu'elle émerge dudit passage 13, un bouton de réglage 14 est classiquement vissé de manière plus ou moins serrée.

Conformément à une variante de réalisation envisageable, la cuvette 2 et la poire 3 peuvent être fabriquées en céramique, ce matériau ayant l'avantage d'être particulièrement solide et résistant à un contact permanent avec un produit alimentaire pouvant se révéler corrosif tel que notamment le sel. La tige axiale 4 et la bride 6 sont soumises à moins de contraintes que la cuvette 2 et la poire 3. De ce fait, elles peuvent avantageusement être réalisées en un matériau plastique, ce qui permet de limiter le coût de fabrication du dispositif 1 et par conséquent d'un moulin 10. Bien entendu, tout autre matériau présentant des propriétés équivalentes peut également être envisagé.

Dans la variante de réalisation illustrée, le moulin 10 comporte également un tube 41 apte à être engagé sur la tige axiale 4 et muni d'une pluralité de pales 42 réparties sur sa paroi externe et permettant le brassage et l'entraînement du produit d'assaisonnement en direction de la cuvette 2. Ce tube 41 est monté bloqué en rotation par rapport à la tige axiale 4 et présente à cet effet une section interne carrée au niveau de son extrémité inférieure 43, apte à coopérer avec une portion 44 de section carrée complémentaire que comporte la tige axiale 4. Le tube 41 est également monté bloqué en rotation par rapport au chapeau 12 du moulin 10 et comporte à cet effet une section externe carrée au niveau de son extrémité supérieure 46 apte à coopérer avec une portion de section interne carrée complémentaire que comporte le passage traversant 13 du chapeau 12.

Grâce à une telle structure du moulin 10, l'actionnement par un utilisateur de son chapeau 12 a pour effet d'entraîner la rotation de la tige axiale 4 et donc de la poire 3 par rapport à la cuvette 2.

Ce mouvement de rotation permet de diriger le produit d'assaisonnement, tombant par gravité depuis le réservoir 9 formé par le corps 11 du moulin 10 vers la cuvette 2, en direction des dentures 32, 20 que comportent respectivement la face externe de la poire 3 et la face interne de la cuvette 2. Le produit d'assaisonnement est moulu par frottement sur les dentures 32, 20 et finalement évacué hors du moulin 10 sous forme de poudre plus ou moins fine.

Conformément à l'invention, le dispositif de mouture 1 comporte en outre un disque de centrage 5 de diamètre identique à celui de la cuvette 2, comportant un orifice central 50 permettant le passage de la tige axiale 4, lequel orifice 50 présente une section circulaire complémentaire à la base 45 de la tige axiale 4.

Le disque de centrage 5 présente par ailleurs deux lumières 51 en forme de demi-lune, symétriques par rapport à son axe, et permettant le passage du produit d'assaisonnement contenu dans le réservoir 9 du moulin 10 et donc son introduction dans la cuvette 2.

Le disque de centrage 5 est monté bloqué en rotation par rapport à la cuvette 2 et comporte à cet effet une paire de pattes 52 s'étendant de manière diamétralement opposée sur son bord dans le prolongement de sa face inférieure 53 et destinées à être logées dans une paire d'encoches 21 réalisées de manière diamétralement opposée sur le chant supérieur 22 de la cuvette 2 et présentant une forme complémentaire à celle des pattes 52.

La présence du disque de centrage 5 permet d'aligner la tige axiale 4 et donc la poire 3 avec l'axe X de la cuvette 2. Le disque de centrage 5 permet ainsi de bloquer le sommet 31 de la poire 3 en position et d'éviter tout mouvement de translation intempestif de la tige axiale 4 selon un axe perpendiculaire à l'axe X de la cuvette 2.

Dans la variante de réalisation illustrée, la bride 6 comporte par ailleurs un plot cylindrique 7 centré sur la face supérieure 61 de sa branche transversale 60, tandis que la face inférieure 30 de la poire 3 comporte un renfoncement 33 complémentaire au plot cylindrique 7 et d'axe aligné avec celui de la tige axiale 4. Cette caractéristique permet de bloquer également la poire 3 en position et de garantir l'alignement de son axe avec celui de la cuvette 2 sur l'ensemble de sa hauteur.

Il ressort clairement de ce qui précède que le dispositif de mouture 1 selon l'invention comporte des moyens techniques permettant d'atteindre l'objectif énoncé en préambule, qui est de garantir le centrage de la poire 3 par rapport à la cuvette 2 à tout moment lors de l'actionnement du moulin 10. Grâce à une telle caractéristique, la longévité et la fiabilité du dispositif de mouture 1 selon l'invention sont améliorées de même que la qualité de la poudre de produit alimentaire récoltée.

Il est à noter que le dispositif de mouture 1 selon l'invention est conçu en tant que module universel adapté pour s'adapter à un grand nombre de moulins présentant différentes formes et caractéristiques.

Bien entendu, de nombreuses modifications peuvent être apportées aux exemples décrits ci-dessus sans sortir du cadre de la présente invention telle que définie par les revendications.

## Revendications

1. Dispositif de mouture (1) d'un produit d'assaisonnement, tel que notamment du sel, une épice ou un condiment, au moyen d'un moulin (10), ledit dispositif de mouture (1) comportant une cuvette (2) d'allure annulaire et une poire (3) d'allure tronconique apte à être entraînée en rotation dans ladite cuvette (2) lors de l'actionnement du moulin (10), au moyen d'une tige axiale (4) reliée à son sommet (31), la face externe de ladite poire (3) étant pourvue de dentures (32), ledit dispositif de mouture (1) comportant également un disque de centrage (5) comportant un orifice central (50) pour le passage de ladite tige axiale (4) et au moins une lumière (51) pour le passage du produit d'assaisonnement et définissant des moyens d'alignement de l'axe de rotation de la poire (3) avec l'axe de la cuvette (2), ainsi qu'une bride (6) de solidarisation du dispositif de mouture (1) audit moulin (10), ladite bride (6) présentant une forme en « U » comportant deux branches latérales (62, 63) reliées par une branche transversale (60), la distance (d) comprise entre les deux branches latérales (62, 63) étant ajustée au diamètre de ladite cuvette, ledit dispositif de mouture (1) comportant des moyens de blocage en rotation du disque de centrage (5) par rapport à ladite cuvette (2), **caractérisé en ce que** la face interne de ladite cuvette (2) est pourvue de dentures (20) et **en ce que** le disque de centrage (5) présente un diamètre identique à celui de ladite cuvette (2).

2. Dispositif de mouture (1) selon la revendication 1, **caractérisé en ce que** les moyens de blocage en rotation du disque de centrage (5) par rapport à ladite cuvette (2) comportent au moins une paire de pattes (52) s'étendant de manière diamétralement opposée sur le bord dudit disque de centrage (5) dans le prolongement de sa face inférieure (53) et au moins une paire d'encoches (21) réalisées de manière diamétralement opposée sur le chant supérieur (22) de ladite cuvette (2) et présentant une forme complémentaire à celle desdites pattes (52).

3. Dispositif de mouture (1) selon l'une quelconque des revendications 1 ou 2, **caractérisé en ce que** l'orifice central (50) dudit disque de centrage (5) présente une section circulaire complémentaire à celle de la base (45) de ladite tige axiale (4).

4. Dispositif de mouture (1) selon l'une quelconque des revendications précédentes, **caractérisé en ce que** la face inférieure (30) de la poire (3) comporte un moyen femelle ou mâle, d'axe aligné avec celui de la tige axiale (4), apte à être monté mobile en rotation par rapport à un moyen mâle ou femelle complémentaire centré sur la branche transversale (60) de ladite bride (6).

5. Dispositif de mouture (1) selon la revendication 4, **caractérisé en ce que** ladite bride (6) comporte un plot cylindrique (7) centré sur la face supérieure (61) de sa branche transversale (60), tandis que la face inférieure (30) de la poire (3) comporte un renfoncement (33) complémentaire au plot cylindrique (7) et d'axe aligné avec celui de la tige axiale (4).

6. Dispositif de mouture (1) selon l'une quelconque des revendications 4 ou 5, **caractérisé en ce qu'**il comporte des moyens de blocage en rotation de ladite cuvette (2) par rapport à ladite bride (6).

7. Dispositif de mouture (1) selon la revendication 6, **caractérisé en ce que** ladite cuvette (2) comporte une paire d'encoches (24) formées de manière diamétralement opposée sur son chant inférieur (23), tandis que ladite bride (6) comporte une paire de butées (64) de forme complémentaire à celle desdites encoches (24) et s'étendant chacune au niveau d'un angle formé entre la branche transversale (60) de la bride (6) et une de ses branches latérales (62, 63).

8. Moulin (10) pour moudre un produit d'assaisonnement tel que notamment du sel, une épice ou un condiment, **caractérisé en ce qu'**il comporte un dispositif de mouture (1) selon l'une quelconque des revendications précédentes.

9. Moulin (10) selon la revendication 8, **caractérisé en ce qu'**il comporte des moyens de brassage et/ou d'entraînement du produit d'assaisonnement en direction de la cuvette (2).

## Patentansprüche

1. Mahlvorrichtung (1) eines Würzprodukts, wie zum Beispiel insbesondere Salz, ein Gewürz oder ein Würzstoff, mittels einer Mühle (10), wobei die Mahlvorrichtung (1) eine ringförmige Schüssel (2) und eine kegelstumpfartige Kugel (3) umfasst, die geeignet ist, in der Schüssel (2) während der Betätigung der Mühle (10) mittels eines axialen Stabs (4), der mit ihrem Scheitel (31) verbunden ist, in Drehung versetzt zu werden, die Außenseite der Kugel (3) mit Zahnungen (32) versehen ist, wobei die Mahlvorrichtung (1) auch eine Zentrierscheibe (5) umfasst, die eine zentrale Öffnung (50) für den Durchgang des axialen Stabs (4) und wenigstens einen Schlitz (51) für den Durchgang des Würzprodukts und Mittel zum Ausrichten der Drehachse der Kugel (3) mit der Achse der Schüssel (2) sowie einen Flansch (6) zum festen Verbinden der Mahlvorrichtung (1) an der Mühle (10) umfasst, wobei der Flansch (6) eine "U"-Form aufweist, die zwei seitliche Schenkel (62, 63) umfasst, die durch einen querlaufenden Schenkel (60) verbunden sind, wobei der Abstand (d) zwischen den zwei seitlichen Schenkeln (62, 63) an den Durchmesser der Schüssel angepasst ist, wobei die Mahlvorrichtung (1) Mittel zum Sperren der Drehung der Zentrierscheibe (5) relativ zu der Schüssel (2) umfasst, **dadurch gekennzeichnet, dass** die Innenfläche der Schüssel (2) mit Zahnungen (20) versehen ist und dass die Zentrierscheibe (5) einen identischen Durchmesser wie der der Schüssel (2) aufweist.

2. Mahlvorrichtung (1) nach Anspruch 1, **dadurch gekennzeichnet, dass** die Mittel zum Sperren der Drehung der Zentrierscheibe (5) relativ zu der Schüssel (2) wenigstens ein Laschenpaar (52), das sich auf dem Rand der Zentrierscheibe (5) in der Verlängerung ihrer Unterseite (53) diametral gegenüberliegend erstreckt und wenigstens ein Kerbenpaar (21) umfassen, das an der oberen Kante (22) der Schüssel (2) diametral gegenüberliegend ausgebildet ist und eine komplementäre Form zu der der Laschen (52) aufweist.

3. Mahlvorrichtung (1) nach einem der Ansprüche 1 oder 2, **dadurch gekennzeichnet, dass** die zentrale Öffnung (50) der Zentrierscheibe (5) einen kreisförmigen Querschnitt aufweist, der komplementär zu dem des Sockels (45) des axialen Stabs (4) ist.

4. Mahlvorrichtung (1) nach einem der vorhergehenden Ansprüche, **dadurch gekennzeichnet, dass** die Unterseite (30) der Kugel (3) ein weibliches oder männliches Mittel umfasst, dessen Achse mit der des axialen Stabs (4) ausgerichtet ist, das fähig ist, relativ zu einem komplementären männlichen oder weiblichen Mittel, das auf dem querliegenden Schenkel (60) des Flansches (6) zentriert ist, drehbeweglich montiert zu werden.

5. Mahlvorrichtung (1) nach Anspruch 4, **dadurch gekennzeichnet, dass** der Flansch (6) einen zylindrischen Kontakt (7) umfasst, der auf der Oberseite (61) seines querliegenden Schenkels (60) zentriert ist, während die Unterseite (30) der Kugel (3) eine Vertiefung (33) umfasst, die zu dem zylindrischen Kontakt (7) komplementär ist, und deren Achse an der des axialen Stabs (4) ausgerichtet ist.

6. Mahlvorrichtung (1) nach einem der Ansprüche 4 oder 5, **dadurch gekennzeichnet, dass** sie Mittel zum Sperren der Drehung der Schüssel (2) relativ zu dem Flansch (6) umfasst.

7. Mahlvorrichtung (1) nach Anspruch 6, **dadurch gekennzeichnet, dass** die Schüssel (2) ein Kerbenpaar (24) umfasst, das an ihrer unteren Kante (23) diametral gegenüberliegend ausgebildet ist, während der Flansch (6) ein Stopperpaar (64) mit einer komplementären Form zu der der Kerben (24) umfasst, und wobei sich jede in einem Winkel erstreckt, der zwischen dem querliegenden Schenkel (60) des Flansches (6) und einem seiner seitlichen Schenkel (62, 63) ausgebildet ist.

8. Mühle (10) zum Mahlen eines Würzprodukts wie zum Beispiel insbesondere Salz, ein Gewürz oder Würzstoff, **dadurch gekennzeichnet, dass** sie eine Mahlvorrichtung (1) nach einem der vorhergehenden Ansprüche umfasst.

9. Mühle (10) nach Anspruch 8, **dadurch gekennzeichnet, dass** sie Mittel zum Mischen und/oder Treiben des Würzprodukts in Richtung der Schüssel (2) umfasst.

## Claims

1. Device (1) for grinding a seasoning product, such as in particular salt, a spice or a condiment, by means of a mill (10), said grinding device (1) comprising an annular bowl (2) and a frustoconical bulb (3) that is capable of being rotated in said bowl (2), during the actuation of the mill (10), by means of an axial rod (4) connected to the top (31) of said bulb, the outer face of said bulb (3) being provided with teeth (32), said grinding device (1) also comprising a centering disc (5) that comprises a central hole (50) for the passage of said axial rod (4) and at least one opening (51) for the passage of the seasoning product and defines means for aligning the axis of rotation of the bulb (3) with the axis of the bowl (2), as well as a flange (6) for securing the grinding device (1) to said mill (10), said flange (6) having a "U" shape comprising two side legs (62, 63) connected by a transverse leg (60), the distance (d) between the two side legs (62, 63) being adjusted to the diameter of said bowl, said grinding device (1) comprising means for locking the centering disc (5) against rotation relative to said bowl (2), **characterized in that** the inner face of said bowl (2) is provided with teeth (20) and **in that** the centering disc (5) has a diameter identical to that of said bowl (2).

2. Grinding device (1) according to claim 1, **characterized in that** the means for locking the centering disc (5) against rotation relative to said bowl (2) comprise at least one pair of tabs (52) extending in a diametrically opposed manner on the rim of said centering disc (5) in the extension of the lower face (53) thereof and at least one pair of notches (21) made in a diametrically opposed manner in the upper edge (22) of said bowl (2) and having a shape complementary to that of said tabs (52).

3. Grinding device (1) according to either claim 1 or claim 2, **characterized in that** the central hole (50) of said centering disc (5) has a circular cross-sectional area complementary to that of the base (45) of said axial rod (4).

4. Grinding device (1) according to any of the preceding claims, **characterized in that** the lower face (30) of the bulb (3) comprises a female or male means which has an axis aligned with that of the axial rod (4) and is capable of being mounted so as to be rotatable relative to a complementary male or female means centered on the transverse leg (60) of said flange (6).

5. Grinding device (1) according to claim 4, **characterized in that** said flange (6) comprises a cylindrical stud (7) centered on the upper face (61) of the transverse leg (60) thereof, while the lower face (30) of the bulb (3) comprises an indentation (33) which is complementary to the cylindrical stud (7) and has an axis aligned with that of the axial rod (4).

6. Grinding device (1) according to either claim 4 or claim 5, **characterized in that** said device comprises means for locking said bowl (2) against rotation relative to said flange (6).

7. Grinding device (1) according to claim 6, **characterized in that** said bowl (2) comprises a pair of notches (24) formed in a diametrically opposed manner in the lower edge (23) of said bowl, while said flange (6) comprises a pair of stops (64) having a shape complementary to that of said notches (24) and each extending at an angle formed between the transverse leg (60) of the flange (6) and one of the side legs (62, 63) thereof.

8. Mill (10) for grinding a seasoning product such as in particular salt, a spice or a condiment, **characterized in that** said mill comprises a grinding device (1) according to any of the preceding claims.

9. Mill (10) according to claim 8, **characterized in that** said mill comprises means for agitating and/or driving the seasoning product toward the bowl (2).
